# EUROPÄISCHE PATENTSCHRIFT

(11) **EP 2 373 951 B1**
(45) Veröffentlichungstag und Bekanntmachung des Hinweises auf die Patenterteilung: **04.06.2014**
(21) Anmeldenummer: 09774883.4
(22) Anmeldetag: 09.12.2009
(51) Int. Cl.: G01B 5/08, G01B 11/08, B23B 25/06, G01B 21/10, B23Q 17/20

(54) **MESSEN VON DURCHMESSERN IN DREHMASCHINEN**
MEASURING DIAMETERS IN LATHES
MESURE DE DIAMÈTRES DANS DES TOURS

(30) Priorität: 10.12.2008 DE 102008061444
(43) Veröffentlichungstag der Anmeldung: 12.10.2011
(73) Patentinhaber: MAG IAS GmbH, 73033 Göppingen (DE)
(72) Erfinder: SCHREIBER, Leo, 73529 Schwäbisch Gmünd (DE)
(74) Vertreter: Alber, Norbert
(86) Internationale Anmeldenummer: PCT/EP2009/066723
(87) Internationale Veröffentlichungsnummer: WO 2010/066786

(56) Entgegenhaltungen:
- DE-A1- 3 831 592
- US-A- 4 031 368
- US-A- 4 774 753

## Beschreibung

### I. Anwendungsgebiet

Die Erfindung betrifft das genaue Messen von Werkstück-Durchmessern in konventionellen Drehmaschinen.

### II. Technischer Hintergrund

Um während des Fertigungsprozesses am eingespannten Werkstück den ursprünglichen oder soeben bearbeiteten Durchmesser genau messen zu können und darauf die nachfolgende Bearbeitung abstimmen zu können, ist es bereits bekannt, in der Drehmaschine eine Messvorrichtung mit einem Messtaster vorzusehen, der die Vermessung durch mechanisches, berührendes Antasten am Werkstück durchführt oder auch mittels optischem Antasten.

Bei konventionellen Drehmaschinen, bei denen also der Spindelstock zum Antrieb des Werkstückes auf dem Bett fest montiert ist oder höchstens in Z-Richtung, der Drehachse, verfahrbar ist, waren solche Messtaster in der Regel in X-Richtung verfahrbar auf dem Bett montiert, um bis zur Berührung an den zu vermessenden Durchmesser heranfahren zu können, und darüber hinaus natürlich in Z-Richtung, um an verschiedenen Axialpositionen messen zu können.

Die dabei benutzten mechanischen Messtaster ragten vorzugsweise auch in dieser Messrichtung, also in der Regel in X-Richtung, von ihrem Halter aus gegen die Drehachse vor.

Auf diese Art und Weise konnte jedoch nur einseitig der Radius des Werkstückes bzgl. der Drehachse in eine Richtung gemessen werden.

Sofern in einer solchen konventionellen Drehmaschine auf zwei einander gegenüberliegenden Querrichtungen, z. B der positiven und negativen X-Richtung, zwei solche Messvorrichtungen montiert waren, konnte in ein und derselben Drehlage des Werkstückes direkt der Durchmesser z. B. eines Zapfens einer Kurbelwelle gemessen werden, jedoch gingen dann in das Messergebnis die Fehler beider Messvorrichtungen in Summe ein, und zusätzlich musste der Aufwand zweier Messvorrichtungen und einer gemeinsamen, verrechnenden Steuerung betrieben werden.

In diesem Zusammenhang ist aus der US 4774 753 eine Messvorrichtung bekannt, bei der ein mechanischer Messtaster quer zur Messrichtung, also der Antastrichtung, von seinem Halter aus vorsteht und mit nur diesem einzigen Messtaster beide einander gegenüberliegende Seiten des Umfanges des Werkstückes gemessen werden.

Allerdings ragt der Messtaster dabei in Z-Richtung von seinem Halter ab, um in Z-Richtung bei Nicht-Benutzung an den Werkzeugrevolver heran geklappt werden zu können.

Dies führt dazu, dass nur einseitig eingespannte Werkstücke vermessen werden können, und nur an ihrem unmittelbaren Endbereich, nicht an davon beabstandeten mittleren Bearbeitungsbereichen.

In einer zweiten Ausführungsform umfasst diese Schrift eine Messvorrichtung, die dieses Hindernis umgeht, allerdings mit zwei Messtastern arbeitet, und dadurch eine Kompensierung von Messfehlern nicht mehr gegeben ist, zusätzlich zum Aufwand der zwei vorzuhaltenden und zu kalibrierenden Messfühler.

### III. Darstellung der Erfindung

### a) Technische Aufgabe

Es ist daher die Aufgabe gemäß der Erfindung, ein Messverfahren und eine entsprechende Ausstattung für eine Drehmaschine zu schaffen, die dieses Problem behebt und dennoch eine sehr genaue direkte Vermessung eines Durchmessers des Werkstückes in einer solchen gattungsgemäßen Drehmaschine ermöglicht.

### b) Lösung der Aufgabe

Diese Aufgabe wird durch die Merkmale der Ansprüche 1 und 7 gelöst. Vorteilhafte Ausführungsformen ergeben sich aus den Unteransprüchen.

Indem der Messfühler nicht nur in einer, sondern in beiden Querrichtungen zur Drehachse verfahrbar ist, kann derselbe Durchmesser mittels des gleichen Messfühlers nacheinander an zumindest zwei verschiedenen Messstellen des Umfanges angetastet und vermessen werden, wofür insbesondere zwei einander gegenüberliegende Messstellen benutzt werden, und zwar ohne die Drehlage der Spindel und damit des Werkstückes zu verändern.

Die so ermittelten Einzelmessungen werden von einer Steuerung und selbstverständlich unter Berücksichtigung der dazwischen erfolgten Verfahrwege des Messfühlers zu einem Werkstück-Durchmesser verrechnet.

Der Vorteil liegt darin, dass zwischen den einzelnen Messungen am selben Durchmesser das Werkstück stillsteht, also keine Fehler in die Messung eingehen, die durch eine zwischen den einzelnen Messungen notwendige Bewegung des Werkstückes entstehen, beispielsweise durch Lagerungsungenauigkeiten des Spindelstockes oder ähnliches.

Natürlich können durch nur einseitiges Antasten auch einfache Radien des Werkstückes gemessen werden. Der Messfühler kann dabei ein mechanischer Messtaster oder auch ein optischer Messfühler sein. Bei Verwendung eines mechanischen Messtasters wird die Antastrichtung vorzugsweise quer zur Erstreckungsrichtung des Messtasters gewählt: Bei einem in Y-Richtung vom Halter abstrebenden Messtaster wird vorzugsweise in X-Richtung angetastet: Nach dem Vermessen in Gegen-X-Richtung wird auf Abstand zum Werkstück gegangen und der Halter so weit in Y-Richtung verfahren, dass der Messtaster vollständig vom zu vermessenden Durchmesser frei wird und in X-Richtung auf die andere Seite des zu vermessenden Durchmessers verfahren werden kann, dann dort in Y-Richtung auf die entsprechende Stelle des Durchmessers in der Regel auf Höhe der Drehachse gebracht und in X-Richtung an den Durchmesser angetastet wird.

Da es hierbei um sehr hohe Messgenauigkeiten geht, muss auch ausgeschlossen werden, dass sowohl am zu vermessenden Werkstück im Meßbereich als auch bei einem mechanischen Messtaster am Messtaster irgendwelche Verunreinigungen, beispielsweise Späne von der vorhergehenden Bearbeitung oder ähnliches, angelagert sind.

Um dies zu vermeiden, wird vorzugsweise vor jeder Messung eine Reinigung der Messstelle am Werkstück und/oder des Messtasters durchgeführt, vorzugsweise durch Abblasen mittels Druckluft, wofür eine Druckluftdüse vorhanden ist. In einer besonders einfachen Ausführungsform ist diese Druckluftdüse direkt dem Messtaster zugeordnet, und kann bei Annäherung des Messtasters an die Werkstückoberfläche mit einem Luftstoß beide gleichzeitig zuverlässig reinigen.

Wird dagegen ein optischer Messfühler, der berührungslos arbeitet, verwendet, so ist der vermessende Lichtstrahl vorzugsweise in Antastrichtung, also möglichst lotrecht auf die Oberfläche des Werkstückes im zu vermessenden Messpunkt, gerichtet und um zwei einander gegenüberliegende Messpunkte an einer umfänglichen Werkstückkontur vermessen zu können, muss hierfür in der Regel der optische Messfühler gedreht werden, um den Messstrahl in seiner Austrittsrichtung umzukehren.

Um dadurch entstehende Messfehler durch das mechanische Drehen des optischen Fühlers zu vermeiden, sind bevorzugt an dem Messfühler zwei in entgegengesetzte Richtungen weisende Strahlausgänge vorhanden, die wahlweise aktiviert und deaktiviert werden können.

### c) Ausführungsbeispiele

Ausführungsformen gemäß der Erfindung sind im Folgenden beispielhaft näher beschrieben. Es zeigen:
- Fig. 1:: eine Drehmaschine mit eingespanntem Werkstück in der Seitenansicht,
- Fig. 2:: den erfindungsgemäßen Messvorgang mit Taster.
- Fig. 3:: den erfindungsgemäßen Messvorgang mit optischem Fühler

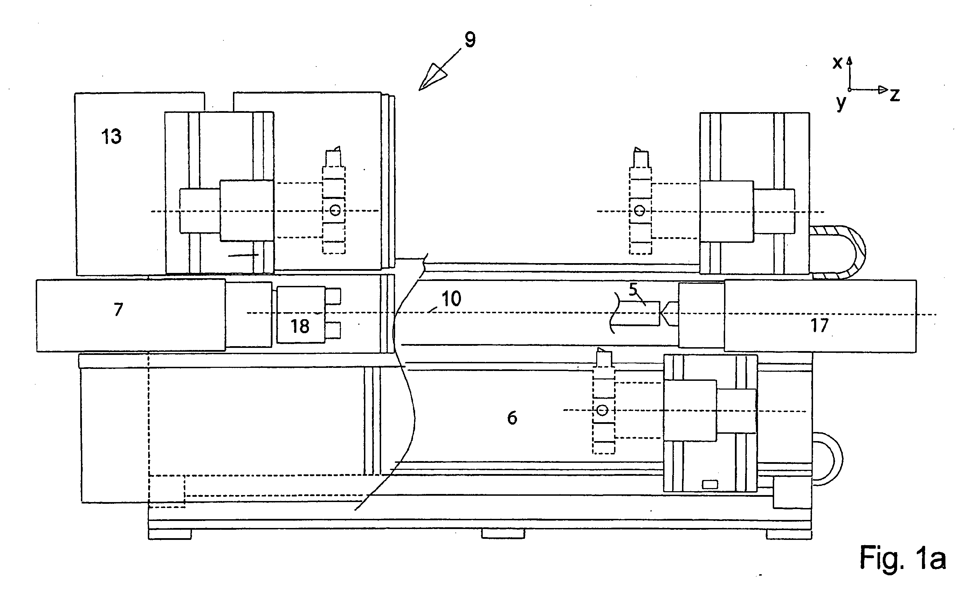

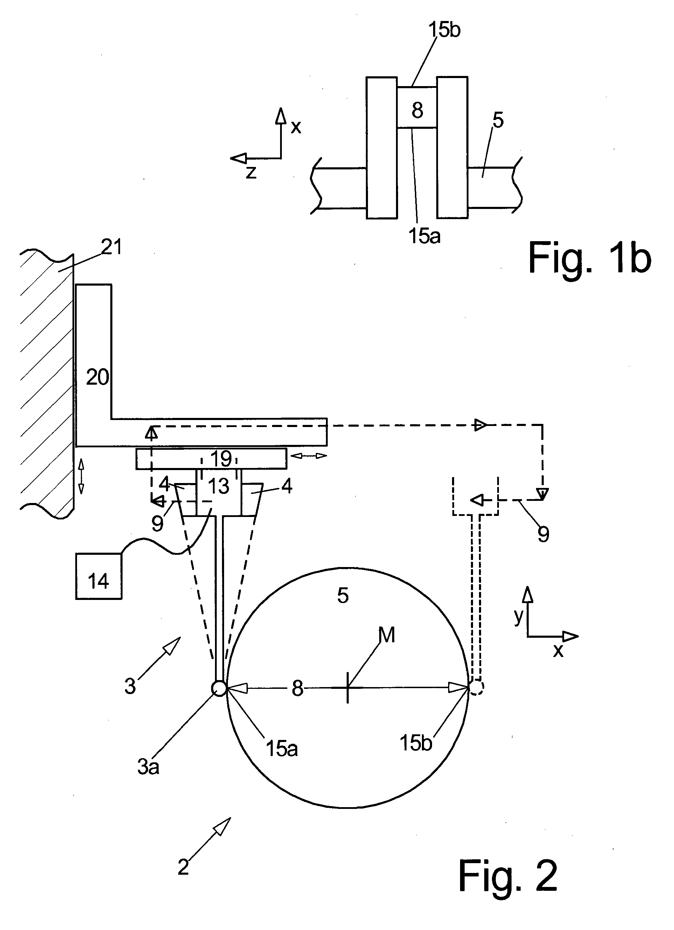

Fig. 1 zeigt eine konventionelle Drehmaschine 1, bei der auf einem Bett 6 ein Spindelstock 7 montiert ist mit einem gegenüberliegenden Reitstock 17. Dazwischen kann als Werkstück 5 z. B. eine Kurbelwelle eingespannt sein, also wie üblich mit einem Ende im Backenfutter 18 des Spindelstockes 7 gehalten und am anderen Ende von beispielsweise einer Spitze des Reitstockes 17 abgestützt.

In der Detaildarstellung der Fig. 1b ist in der Aufsicht betrachtet ein exzentrisch zur Drehachse 10 der eingespannten Kurbelwelle liegender Hublagerzapfen dargestellt, dessen Durchmesser 8 vermessen werden soll.

Dieser Durchmesser 8 ist in Fig. 2 im Querschnitt vergrößert dargestellt, einschließlich der erfindungsgemäßen Messvorrichtung 2:

Dabei ragt ein mechanischer Messtaster 3 von seinem Halter 13 in Y-Richtung ab.

Zur Durchführung eines Messvorganges muss der stabförmige Messtaster 3 mit seinem vorzugsweise verdickten, freien Ende 3a, welches den eigentlichen Taster darstellt, in Querrichtung zur Erstreckung des Messfühlers 3, also in diesem Fall in X-Richtung, an die zu vermessende Messstelle 15a der Kontur bis zur Kontaktierung heranbewegt werden, die in diesem Fall der in negative X-Richtung am weitesten vorstehende Punkt des Durchmessers 8 ist.

Sobald dies erfolgt ist, ermittelt die mit dem Messtaster 3 gekoppelte Steuerung 14 die aktuelle Lage des Halters 13, da die Messvorrichtung 2, die mittels des Halters 13 ja an der Drehmaschine 1 montiert ist, über einen Antrieb verfügt, der auch über eine Positionsmessvorrichtung für den Halter 13 verfügt.

Da die Abstrebrichtung des Messtasters 3 vom Halter 13 bekannt ist und ebenso die Abmessungen des Tasters, also in diesem Fall der Durchmesser 3a des kugelförmigen, verdickten freien Endes des Messtasters 3, kann die Steuerung 14 aus diesen Daten die exakte Lage des Kontaktpunktes zwischen dem Messtaster 3 und dem zu vermessenden Durchmesser 8 bestimmen.

Dass hierfür als Kontaktpunkt der in Antastrichtung 9, hier der X-Richtung, am weitesten vorstehende Punkt der zu vermessenden Kontur 8, also in Y-Richtung auf Höhe des Mittelpunktes M des zu vermessenden Durchmessers 8, gewählt wird, ist bei einer rotationssymmetrischen Werkstückkontur selbstverständlich.

Sobald die Vermessung dieser Messstelle 15a erfolgt ist, wird der Halter 13 des Messtasters 3 entgegen der Antastrichtung 9, also in X-Richtung vom Werkstück 5 abgehoben, in Y-Richtung so weit verfahren, dass der Messtaster 3 ohne Kollision mit dem Werkstück 5 auf die andere Seite des zu vermessenden Durchmessers in X-Richtung verfahren werden kann, dort der Messtaster in Y-Richtung wieder vorwärtsgefahren, bis sich das freie Ende 3a des Messtasters wiederum auf Höhe des Mittelpunktes M des Durchmessers 8 befindet und dann erneut in negativer X-Richtung an der zweiten Messstelle 15b angetastet.

Aus der Differenz der Positionsdaten der beiden so ermittelten Kontaktstellen an den Messstellen 15a und 15b errechnet die Steuerung 14 den Durchmesser 8.

Bei mehr als zwei Messstellen verteilt über den Umfang des zu vermessenden Durchmessers 8 - wofür der Messfühler 3 entsprechend ausgelegt sein muss, also beispielsweise entweder schwenkbar sein muss oder auch ein Antasten in Längsrichtung seines Messfühlers 3 zulassen muss - kann nicht nur der Durchmesser, sondern die konkrete Kontur des zu vermessenden Durchmessers 8 ermittelt werden ohne das Werkstück 5 zu drehen, und damit auch an diesem Durchmesser 8 vorhandene z.B. Rundheitsabweichungen.

Auch unrunde Werkstückkonturen können auf diese Art und Weise direkt in der Werkzeugmaschine bei stillstehendem Werkstück vermessen werden.

Fig. 2 zeigt ferner die am Halter 13 des Messfühlers 3 angeordnete Druckluftdüse 4, die auf das freie Ende 3a des Messfühlers 3 gerichtet ist, und mit der kurz vor dem Kontaktieren des Werkstückes 5 durch einen Luftstoß sowohl der Messtaster 3 als auch die Werkstückoberfläche gereinigt wird. Selbstverständlich muss darauf geachtet werden, dass der Luftstoß nicht so stark ist, dass er den Messtaster 3 beschädigen, beispielsweise verbiegen, kann.

Da der Messtaster zum Antasten in beide Querrichtungen benutzt wird, ist die Druckluftdüse 4 vorzugsweise doppelt auf einander gegenüberliegenden Seiten des Halters 13 angeordnet und auf die beiden Seiten des freien Endes 3a des Messfühlers 3 gerichtet.

In Figur 2 ist ferner die Anordnung des Halters 13 auf einem in X- und Y-Richtung verfahrbaren Schlittensystem der Werkzeugmaschine schematisch dargestellt:

Dabei ist zu erkennen, dass der Halter 13 vorzugsweise auf denjenigen Schlitten, hier dem X-Schlitten 19 verschraubt ist, direkt befestigt ist, der in Antastrichtung 9 verfahrbar ist auf einem weiteren Schlitten, hier dem Y-Schlitten 20, der seinerseits in der anderen Querrichtung, hier der Y-Richtung an einem ortsfesten Teil der Werkzeugmaschine oder einem Z-Schlitten 21 verfahrbar ist.

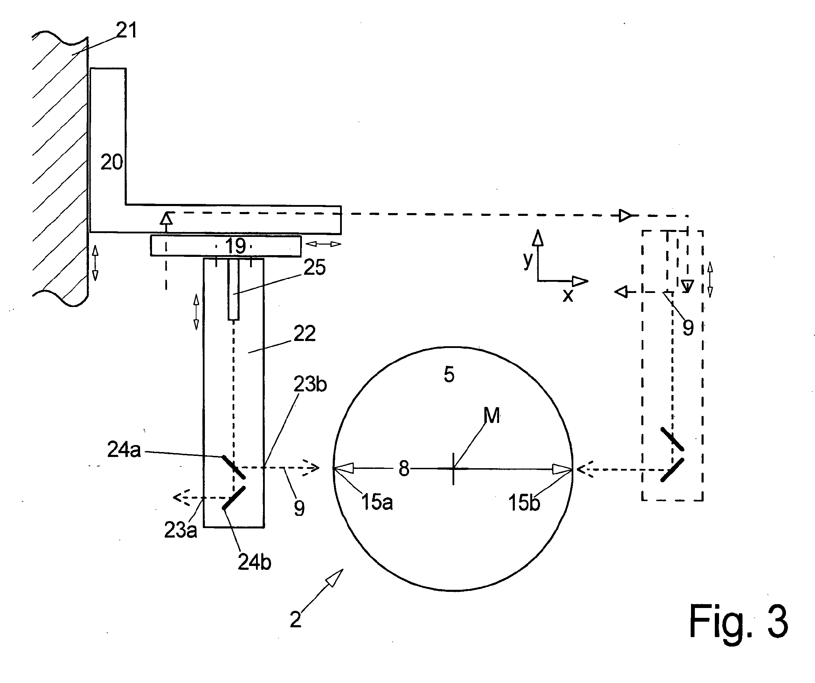

Figur 3 zeigt eine Lösung mit einem optischen, berührungslos arbeitenden Messfühler 22, in dem beispielsweise eine Laserquelle 25 einen Lichtstrahl erzeugt, der gegen das Werkstück 5 gerichtet wird, und dessen vom Werkstück reflektierter Strahl vom Messfühler 22 detektiert und daraus der Abstand des Messfühlers 22 vom Werkstück 5 bestimmt wird.

Um das Werkstück 5 von beiden Seiten antasten zu können, ohne den optischen Messfühler 22 drehen zu müssen, besitzt der optische Messfühler 22 zwei getrennte Strahlausgänge 23a und 23b, die in positiver und negativer Antastrichtung 9 gerichtet sind, und aus ein- und demselben Laserstrahl erzeugt werden mittels z. B. eines halbdurchlässigen und eines undurchlässigen Spiegels 24a, b im Strahlverlauf des Laserstrahls. Durch abwechselndes Öffnen eines der Strahlausgänge erfolgt ein Antasten nur in der gewünschten positiven oder negativen Antastrichtung.

Dadurch genügt für das Vermessen von zwei z. B. einander gegenüberliegenden Messpunkten 15a, b ein Verfahrweg des optischen Messfühlers 22 wie zuvor anhand des Halters 13 des mechanischen Messtasters 3 anhand von Figur 2 beschrieben.

### BEZUGSZEICHENLISTE

- 1: Drehmaschine
- 2: Messvorrichtung
- 3: Messtaster
- 3a: freies Ende
- 4: Druckluftdüse
- 5: Werkstück
- 6: Bett
- 7: Spindelstock
- 8: Durchmesser
- 9: Antastrichtung
- 10: Drehachse (Z-Richtung)
- 11: X-Richtung
- 12: Y-Richtung
- 13: Halter
- 14: Steuerung
- 15a, b,: Messstelle
- 16a, b, c: Verfahrweg
- 17: Reitstock
- 18: Backenfutter
- 19: X-Schlitten
- 20: Y-Schlitten
- 21: Z-Schlitten
- 22: opt. Messfühler
- 23a, b: Strahlausgang
- 24a, b: Spiegel
- M: Mittelpunkt

## Patentansprüche

1. Drehmaschine (1) mit
- einem auf einem Bett (6) angeordneten, um die Z-Richtung (10), die Drehachse, drehend antreibbaren Spindelstock (7) zum Aufnehmen des Werkstückes (5),
- einer Messvorrichtung (2) mit einem Messfühler (3,23) zum Vermessen eines zentrischen oder exzentrischen Durchmessers (8) eines eingespannten Werkstückes (5),
**dadurch gekennzeichnet, dass**
der Messfühler (3,23) in beide Querrichtungen zur Drehachse, der X-Richtung (11) und Y-Richtung (12), verfahrbar ist.

2. Drehmaschine (1) nach Anspruch 1,
**dadurch gekennzeichnet, dass**
der Messfühler (3) ein mechanischer Messtaster (3) oder ein optischer, berührungslos arbeitender Messfühler (23) ist.

3. Drehmaschine (1) nach einem der vorhergehenden Ansprüche,
**dadurch gekennzeichnet, dass**
der Messfühler (3,23) auch in Z-Richtung (10) verfahrbar ist.

4. Drehmaschine (1) nach einem der vorhergehenden Ansprüche,
**dadurch gekennzeichnet, dass**
der Messfühler (3) in einer der Querrichtungen von seinem Halter (13) abragt und die andere Querrichtung als Antastrichtung (9) benutzt wird.

5. Drehmaschine (1) nach einem der vorhergehenden Ansprüche,
**dadurch gekennzeichnet, dass**
die Drehmaschine (1), insbesondere die Messvorrichtung (2), eine Reinigungsvorrichtung umfasst, die insbesondere eine Druckluftdüse (4) aufweist, die auf eine Messstelle (15a, b) gerichtet ist.

6. Drehmaschine (1) nach einem der vorhergehenden Ansprüche,
**dadurch gekennzeichnet, dass**
die Drehmaschine (1), insbesondere die Messvorrichtung (2), eine Steuerung (14) umfasst, die
- das Antasten an dem zu vermessenden Durchmesser (8) von zwei einander gegenüberliegenden Seiten in Antastrichtung (9) steuert,
- die erzielten Ergebnisse gegeneinander verrechnet und
- gegebenenfalls unmittelbar vor dem Vermessen die Reinigung der Messstelle (15a, b) veranlasst.

7. Verfahren zum Vermessen eines zentrischen oder exzentrischen Durchmessers (8) eines Werkstückes (5), welches in einer Drehmaschine (1) um die Z-Richtung (10), die Drehachse, im Spindelstock (7) drehend antreibbar eingespannt ist, mittels eines Messfühlers (3,23) einer Messvorrichtung (2) der Drehmaschine (1),
**wobei**
- das Vermessen des Werkstückes (5) an mindestens zwei verschiedenen, insbesondere einander gegenüberliegenden, Messstellen (15a, b) des Durchmessers (8) bei stillstehendem Werkstück (5) erfolgt,
- das Vermessen der verschiedenen Messstellen (15a, b) desselben Durchmessers (8) nacheinander mit dem gleichen Messfühler (3,23) erfolgt, und
- die ermittelten Einzelmessungen von einer Steuerung (14) und unter Berücksichtigung der dazwischen festgehaltenen Bewegungen der Messvorrichtung automatisch zu einem Durchmesser verrechnet werden, **dadurch gekennzeichnet, dass**
der Messfühler (3,23) zum Anfahren der verschiedenen Messstellen (15a, b) in beiden Querrichtungen zur Drehachse , der X- und Y-Richtung, verfahren wird.

8. Verfahren nach Anspruch 7,
**dadurch gekennzeichnet, dass**
der Messfühler (3) in einer der Querrichtungen von seinem Halter (13) abragt und die andere Querrichtung als Antastrichtung (9) benutzt wird.

9. Verfahren nach einem der vorhergehenden Verfahrensansprüche,
**dadurch gekennzeichnet, dass**
vor dem Vermessen der Messstelle (15a, b) die Messstelle (15a, b) gereinigt wird, insbesondere durch Abblasen mit Druckluft.

10. Verfahren nach einem der vorhergehenden Verfahrensansprüche,
**dadurch gekennzeichnet, dass**
die Reinigung der Messstelle (15a, b) vor dem Vermessen von der Steuerung (14) automatisch veranlasst wird.

11. Verfahren nach einem der vorhergehenden Verfahrensansprüche,
**dadurch gekennzeichnet, dass**
vor dem Messvorgang der Messfühler (3) gereinigt wird, insbesondere ebenfalls mittels der Reinigungsvorrichtung für die Messstelle (15a, b), insbesondere im gleichen Arbeitsgang.

## Claims

1. A turning machine (1), comprising:
- a spindle stock (7) arranged on a bed (6) and drivable to rotate about a Z-direction (10) forming a rotation axis for receiving a work piece (5),
- a measuring device (2) with a measuring probe (3, 23) for measuring a centric or eccentrical diameter (8) of a clamped work piece (5);
**characterized in that**
the measuring probe (3, 23) is moveable in both transversal directions, an X-direction (11) and a Y-direction (12).

2. The turning machine according to claim 1,
**characterized in that**
the measuring probe (3) is a mechanical scanning probe (3) or an optical touch free scanning probe (23).

3. The turning machine (1) according to one of the preceding claims,
**characterized in that**
the measuring probe (3, 23) is also moveable in a Z-direction (10).

4. The turning machine (1) according to one of the preceding claims,
**characterized in that**
the measuring probe (3) extends from a support (13) in one of the transversal directions and the other transversal direction is used as a scanning direction (9).

5. The turning machine (1) according to one of the preceding claims,
**characterized in that**
the turning machine (1), in particular the measuring device (2) includes a cleaning device which includes in particular a compressed air nozzle (4) which is oriented towards a measuring location (15a, b).

6. The turning machine (1) according to one of the preceding claims,
**characterized in that**
- the turning machine (1), in particular the measuring device (2) includes a control (14), which
- controls scanning a diameter (8) to be scanned from two opposite sides in the scanning direction (9),
- computes obtained results with one another, and
- optionally causes a cleaning of the measuring location (15a, b) directly before measuring.

7. A method for measuring a centric or an eccentrical diameter (8) of a work piece (5) which is clamped to be driven in rotation in a turning machine about a Z-direction (10), a rotation axis, in the spindle stock (7) through a measuring probe (3, 23) of a measuring device (2) of the turning machine (1), wherein
- measuring the work piece (5) is performed at least at two different, in particular opposite measuring locations (15a, b) of the diameter (8) for a stationary work piece (5),
- measuring the measuring locations (15a, b) of an identical diameter (8) is performed sequentially with the same measuring probe (3, 23), and
- captured individual measurements are automatically computed by a control (14) to generate a diameter in consideration of a movement of the measuring device that is recorded between the individual measurements.
**characterized in that**
the measuring probe (3, 23) is moved in both transversal directions X and Y relative to the rotation axis for approaching the different measuring locations (15a, b).

8. The method according to claim 7,
**characterized in that**
the measuring probe (3) extends in one of the transversal directions from its support (13) and the other transversal direction is used as a scanning direction (9).

9. The method according to one of the preceding method claims,
**characterized in that**
the measuring location (15a, b) is cleaned before measuring the measuring location (15a, b) in particular by blasting with compressed air.

10. The method according to one of the preceding method claims,
**characterized in that**
cleaning the measuring location (15a, b) is automatically caused by the control (14) before measuring.

11. The method according to one of the preceding method claims,
**characterized in that**
the measuring probe (3) is cleaned before the measuring method is performed, in particular also cleaned through the cleaning device for the measurement location (15a, b), in particular in the same process step.

## Revendications

1. Tour (1) comprenant :
- une poupée (7) aménagée sur un lit (6) et qui peut être entraînée en rotation autour de la direction Z (10), l'axe de rotation, pour recevoir la pièce à usiner (5), et
- un dispositif de mesure (2) avec un capteur (3, 23) pour mesurer un diamètre central ou excentrique (8) d'une pièce fixée (5),
**caractérisé en ce que**
le capteur (3, 23) peut être déplacé dans les deux directions transversales par rapport à l'axe de rotation, la direction X (11) et la direction Y (12).

2. Tour (1) selon la revendication 1,
**caractérisé en ce que**
le capteur (3) est un palpeur de mesure mécanique (3) ou un capteur optique (23) opérant sans contact.

3. Tour (1) selon l'une quelconque des revendications précédentes,
**caractérisé en ce que**
le capteur (3, 23) peut également être déplacé dans la direction Z (10).

4. Tour (1) selon l'une quelconque des revendications précédentes,
**caractérisé en ce que**
le capteur (3) descend de son support (13) dans l'une des directions transversales et l'autre direction transversale est utilisée comme direction de palpage (9).

5. Tour (1) selon l'une quelconque des revendications précédentes,
**caractérisé en ce que**
le tour (1), en particulier le dispositif de mesure (2), comprend un dispositif de nettoyage, qui présente en particulier une buse d'air comprimé (4), qui est dirigée sur un emplacement de mesure (15a, b).

6. Tour (1) selon l'une quelconque des revendications précédentes,
**caractérisé en ce que**
le tour (1), en particulier le dispositif de mesure (2), comprend une commande (14) qui :
- commande le palpage sur le diamètre à mesurer (8) de deux côtés opposés l'un à l'autre dans la direction de palpage (9),
- compense mutuellement les résultats obtenus et
- assure éventuellement, directement avant la mesure, le nettoyage de l'emplacement de mesure (15a, b).

7. Procédé de mesure d'un diamètre central ou excentrique (8) d'une pièce à usiner (5), qui est serrée dans un tour (1) de manière à pouvoir être entraînée en rotation dans la poupée (7) autour de la direction Z (10), au moyen d'un capteur (3, 23) d'un dispositif de mesure (2) du tour (1),
dans lequel :
- la mesure de la pièce (5) se fait en au moins deux emplacements de mesure (15a, b) différents du diamètre (8), en particulier opposés l'un à l'autre, tandis que la pièce (5) reste stationnaire,
- la mesure des différents emplacements de mesure (15a, b) du même diamètre (8) se fait successivement avec le même capteur (3, 23) et
- les mesures individuelles obtenues sont compensées par une commande (14) et, en tenant compte des mouvements du dispositif de mesure retenus entre elles, sont automatiquement compensées en un diamètre,
**caractérisé en ce que**
le capteur (3, 23) est déplacé pour venir en contact avec les divers emplacements de mesure (15a, b) dans les deux directions transversales à l'axe de rotation, la direction X et la direction Y.

8. Procédé selon la revendication 7,
**caractérisé en ce que**
le capteur (3) descend de son support (13) dans une des directions transversales et l'autre direction transversale est utilisée comme direction de palpage (9).

9. Procédé selon l'une quelconque des revendications précédentes,
**caractérisé en ce que**
l'emplacement de mesure (15a, b) est nettoyé avant la mesure de l'emplacement de mesure (15a, b), en particulier par décharge d'air comprimé.

10. Procédé selon l'une quelconque des revendications précédentes,
**caractérisé en ce que**
le nettoyage de l'emplacement de mesure (15a, b) est effectué automatiquement avant la mesure par la commande (14).

11. Procédé selon l'une quelconque des revendications précédentes,
**caractérisé en ce que**
le capteur (3) est nettoyé avant l'opération de mesure, en particulier également au moyen du dispositif de nettoyage pour l'emplacement de mesure (15a, b), en particulier au cours de la même opération de travail.
